# EUROPEAN PATENT SPECIFICATION

(11) **EP 3 715 427 B1**
(45) Date of publication and mention of the grant of the patent: **15.03.2023**
(21) Application number: 18880940.4
(22) Date of filing: 20.11.2018
(51) Int. Cl.: C09D 179/08, C09D 5/25, C09D 5/44, C25D 13/00, C25D 13/06, H01B 3/30

(54) **RESIN FOR FORMING INSULATING COATING FILM, VARNISH, ELECTRODEPOSITION LIQUID, AND METHOD FOR PRODUCING INSULATED CONDUCTOR**
HARZ ZUR HERSTELLUNG EINES ISOLIERBESCHICHTUNGSFILMS, LACK, ELEKTROTAUCHFLÜSSIGKEIT UND VERFAHREN ZUR HERSTELLUNG EINES ISOLIERTEN LEITERS
RÉSINE POUR FORMER UN FILM DE REVÊTEMENT ISOLANT, VERNIS, LIQUIDE D'ÉLECTRODÉPOSITION ET PROCÉDÉ DE PRODUCTION DE CONDUCTEUR ISOLÉ

(30) Priority: 21.11.2017 JP 2017223537
(43) Date of publication of application: 30.09.2020
(73) Proprietor: Mitsubishi Materials Corporation, Chiyoda-ku Tokyo 100-8117 (JP)
(72) Inventor: HIRANO, Koji, Naka-shi Ibaraki 311-0102 (JP); IIDA, Shintaro, Naka-shi Ibaraki 311-0102 (JP); SAKURAI, Hideaki, Naka-shi Ibaraki 311-0102 (JP)
(74) Representative: Gille Hrabal Partnerschaftsgesellschaft mbB Patentanwälte
(86) International application number: PCT/JP2018/042831
(87) International publication number: WO 2019/102994

(56) References cited:
- WO-A1-2012/043775
- WO-A1-2017/141885
- JP-A- 2006 308 765
- JP-A- 2007 217 496
- JP-A- 2007 217 499
- JP-A- 2009 069 664
- US-A1- 2010 113 689

## Description

### TECHNICAL FIELD

The present invention relates to a resin for forming an insulating film, a varnish, an electrodeposition dispersion, and a method for producing an insulated conductor.

### BACKGROUND ART

An insulated conductor obtained by coating a conductor such as a copper wire with an insulating film is used to an electric coil for various electric devices such as motors and transformers. As materials of the insulating film of the insulated conductor, resins such as a polyamide-imide and a polyimide are widely used.

As a method for producing an insulated conductor, a coating method and an electrodeposition method are known. The coating method is a method in which a varnish containing a resin for forming an insulating film and a solvent is applied to the surface of a conductor to form a coating layer, and then the coating layer is heated to produce an insulating film and bake the insulating film on the conductor. The electrodeposition method is a method in which an electrodeposition dispersion containing a resin for forming an insulating film, a polar solvent, water, a poor solvent, and a base is electrodeposited on the surface of a conductor to form an electrodeposition layer, and then the electrodeposition layer is heated to produce an insulating film and bake the insulating film on the conductor.

In a case where an insulated conductor is exposed to a high temperature environment, the adhesiveness between the conductor and the insulating film may decrease due to oxidation of the conductor or deterioration of the insulating film.

In Patent Document 1, as a varnish (insulating paint) capable of forming an insulating film having high adhesiveness to a conductor in the high temperature environment, an insulating paint which is a compound having a boiling point of 160°C or more and a carbon number of 10 or more and to which at least one reducing agent selected from the group consisting of a primary alcohol, a secondary alcohol, a primary thiol, and a secondary thiol is added is described.

JP 2009 069664 A discloses resins similar to the ones of the current invention. However, these resins differ at least with regards to the chemical structure, as the modified polyimide of JP 2009 069664 A comprise a polycarbonate skeleton.

US 2010/113689 A discloses resins similar to the ones of the current invention. However, these resins differ at least with regards to the chemical structure, as the modified polyimide of US 2010/113689 A includes a polycarbonate structure as an essential component.

WO 2012/043775 A discloses resins similar to the ones of the current invention.

However, these resins differ at least with regards to the chemical structure, as the modified polyimides of WO 2012/043775 A do not comprise a modified polyimide resin in which the polyimide is bonded to the nitrogen side of the urethane structure.

JP 2006 308765 A discloses resins similar to the ones of the current invention. However, these resins differ at least with regards to the chemical structure of the modified polyimide of the current invention, as the modified polyimide of JP 2006 308765 A has phenolic hydroxyl groups in the end groups, whereas in the current invention, the groups L³ and L⁴ are each independently an alkylene group having carbon atoms in a range of 2 to 12.

JP 2007 217496 A discloses resins similar to the ones of the current invention. However, these resins differ at least with regards to the chemical structure of the polyamide-imide from the ones of the current invention; namely in JP 2007 217496 A the hydroxyl group-containing modifying group is bonded to the polyamide-imide resin via an amide bond, whereas, in the current invention, an urethane group is used.

JP 2007 217499 A discloses resins similar to the ones of the current invention. However, these resins differ at least with regards to the chemical structure of the modified polyimide from the ones of the current invention; namely in JP 2007 217499 A the hydroxyl group-containing modifying group is bonded to the polyimide resin via an amide bond, whereas, in the current invention, a urethane group is used.

### Citation List

### Patent Literature

[Patent Document 1] Japanese Patent No. 5871439

### DISCLOSURE OF INVENTION

### Technical Problem

In an insulating paint described in Patent Document 1, a reducing agent is left in an insulating film of an insulated conductor produced using the insulating paint to suppress the oxidation of the conductor with the left reducing agent so that the adhesiveness between the conductor and the insulating film in the high temperature environment is maintained. However, in a case where the insulating film in which the reducing agent is left is stored for a long period of time in the high temperature environment, the reducing agent left in the insulating film gradually volatilizes, and there has been a possibility that the effect of the reducing agent to suppress the oxidation of the conductor by the reducing agent is lost.

The present invention has been made in consideration of the above-mentioned circumstances, and an object of the present invention is to provide a resin for forming an insulating film capable of forming an insulating film having excellent adhesiveness to a conductor even when stored for a long period of time in the high temperature environment, a varnish, an electrodeposition dispersion, and a method for producing an insulated conductor.

### Solution to problem

In order to solve the problems described above, the following is provided:
[Item 1] A resin for forming an insulating film comprising at least one of a modified polyamide-imide having a terminal OH group or a terminal SH group and a modified polyimide having a terminal OH group or a terminal SH group,
   wherein the modified polyamide-imide is a compound represented by the following General Formula (1): 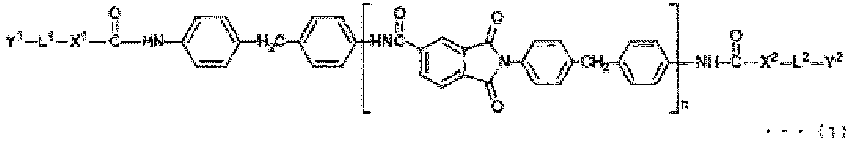 wherein, in the formula,
   X¹ and X² are each independently O or S,
   L¹ and L² are each independently an alkylene group having carbon atoms in a range of 2 to 12,
   Y¹ is SH when X¹ is S and Y¹ is OH when X¹ is O,
   Y² is SH when X² is S and Y² is OH when X² is O, and
   n is an integer of 30 or more, and
   wherein the modified polyimide is a compound represented by the following 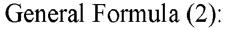 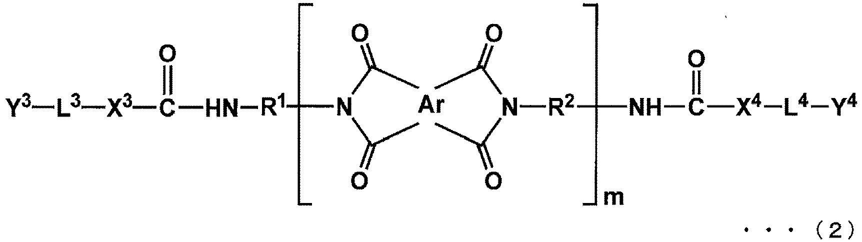 wherein, in the formula,
   Ar is a tetravalent aromatic group,
   R¹ and R² are each independently a divalent aromatic group, or a group in which a divalent aromatic group is linked with an alkylene group having 1 to 12 carbon atoms, -CO-, -O-, -NR- (where R is a hydrogen atom or an alkyl group having 1 to 8 carbon atoms) that may be substituted with an alkyl group having 1 to 8 carbon atoms, -S-, -SO- or -SO²-,
   X³ and X⁴ are each independently O or S,
   L³ and L⁴ are each independently an alkylene group having carbon atoms in a range of 2 to 12,
   Y³ is SH when X³ is S and Y³ is OH when X³ is O,
   Y⁴ is SH when X⁴ is S and Y⁴ is OH when X⁴ is O, and
   m is an integer of 30 or more.
[Item 2] The resin for forming an insulating film according to [Item 1],
   wherein the modified polyamide-imide and the modified polyimide have a weight average molecular weight in a range of 10 × 10⁴ to 30 × 10⁴, or a number average molecular weight in a range of 2 × 10⁴ to 5 × 10⁴.
[Item 3] The resin for forming an insulating film according to [Item 1] or [Item 2],
   wherein the modified polyamide-imide is obtained by bonding an NCO group of a polyamide-imide having a terminal NCO group and an OH group of a linear diol or an SH group of a linear dithiol.
[Item 4] The resin for forming an insulating film according to [Item 1] or [Item 2],
   wherein the modified polyimide is obtained by bonding an NCO group of a polyimide having a terminal NCO group and an OH group of a linear diol or an SH group of a linear dithiol.
[Item 5] A varnish comprising:
   a resin for forming an insulating film; and
   a polar solvent,
   wherein the resin for forming an insulating film is the resin for forming an insulating film according to any one of [Item 1] to [Item 4].
[Item 6] A method for producing an insulated conductor comprising:
   a step of applying the varnish according to [Item 5] to a surface of a conductor to form a coating layer on the surface of the conductor; and
   a step of heating the coating layer to produce an insulating film and bake the insulating film on the conductor.
[Item 7] An electrodeposition dispersion comprising:
   a resin for forming an insulating film;
   a polar solvent;
   water;
   a poor solvent; and
   a base,
   wherein the resin for forming an insulating film is the resin for forming an insulating film according to any one of [Item 1] to [Item 4].
[Item 8] A method for producing an insulated conductor comprising:
   a step of electrodepositing the electrodeposition dispersion according to [Item 7] to a surface of a conductor to form an electrodeposition layer on the surface of the conductor; and
   a step of heating the electrodeposition layer to produce an insulating film and bake the insulating film on the conductor.

According to the resin for forming an insulating film of the present invention, a modified polyamide-imide and a modified polyimide have a terminal OH group or a terminal SH group and have high reducing power. Therefore, by coating a conductor with an insulating film formed using the resin for forming an insulating film, it is possible to suppress the oxidation of the conductor in the high temperature environment, and, as a result, it is possible to suppress a decrease in adhesiveness between the conductor and the insulating film due to the oxidation of the conductor. In addition, because the modified polyamide-imide and the modified polyimide have a high boiling point and high stability in the high temperature environment, compared with compounds conventionally used as a reducing agent, the effect of suppressing the oxidation of the conductor by the OH group or the SH group is difficult to be lost even when stored for a long period of time in the high temperature environment. As a result, according to the resin for forming an insulating film of the present invention, it is possible to form an insulating film having excellent adhesiveness to a conductor even when stored for a long period of time in the high temperature environment.

In the resin for forming an insulating film of the present invention, the modified polyamide-imide and the modified polyimide preferably have a weight average molecular weight in a range of 10 × 10⁴ or more and 30 × 10⁴ or less, or a number average molecular weight in a range of 2 × 10⁴ or more and 5 × 10⁴ or less.

In this case, since the modified polyamide-imide and the modified polyimide have a high molecular weight, the volatilization thereof hardly occurs even when stored for a long period of time in the high temperature environment. As a result, it is possible to more reliably form an insulating film having excellent adhesiveness to a conductor even when stored for a long period of time in the high temperature environment.

In addition, in the resin for forming an insulating film of the present invention, the modified polyamide-imide is preferably obtained by bonding an NCO group of a polyamide-imide having a terminal NCO group and an OH group of a linear diol or an SH group of a linear dithiol.

In this case, since the modified polyamide-imide has the OH group derived from a linear diol or the SH group derived from a linear dithiol, the reducing power is increased.

In addition, in the resin for forming an insulating film of the present invention, the modified polyamide-imide is a compound represented by the following General Formula (1). 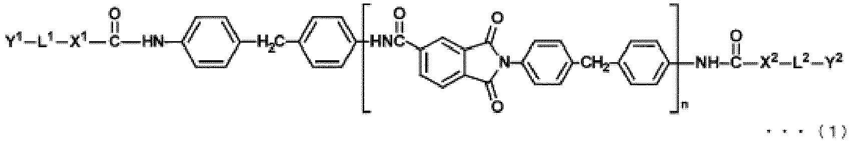 (in the formula, X¹ and X² are each independently O or S, L¹ and L² are each independently an alkylene group having carbon atoms in a range of 2 to 12, Y¹ is SH when X¹ is S and Y¹ is OH when X¹ is O, Y² is SH when X² is S and Y² is OH when X² is O, and n is an integer of 30 or more.)

In this case, since the terminal OH group or SH group is bonded to the alkylene group in the modified polyamide-imide, the reducing power is further increased.

In addition, in the resin for forming an insulating film of the present invention, the modified polyimide is preferably obtained by bonding an NCO group of a polyimide having a terminal NCO group and an OH group of a linear diol or an SH group of a linear dithiol.

In this case, since the modified polyimide has the OH group derived from a linear diol or the SH group derived from a linear dithiol, the reducing power is increased.

In addition, in the resin for forming an insulating film of the present invention, the modified polyimide is a compound represented by the following General Formula (2). 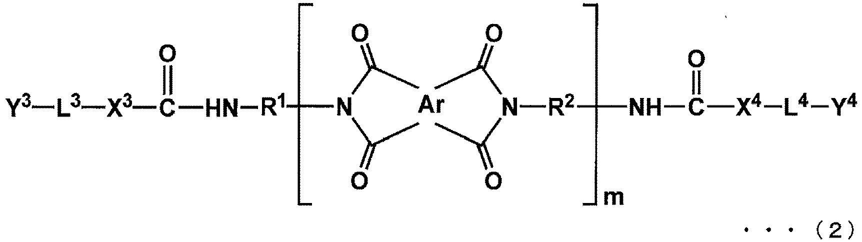 (in the formula, Ar is a tetravalent aromatic group, R¹ and R² are each independently a divalent organic group or a group in which a divalent aromatic group is linked with an alkylene group having 1 to 12 carbon atoms, -CO-, -O-, -NR- (where R is a hydrogen atom or an alkyl group having 1 to 8 carbon atoms) that may be substituted with an alkyl group having 1 to 8 carbon atoms, -S-, -SO- or -SO²-, X³ and X⁴ are each independently O or S, L³ and L⁴ are each independently an alkylene group having carbon atoms in a range of 2 to 12, Y³ is SH when X³ is S and Y³ is OH when X³ is O, Y⁴ is SH when X⁴ is S and Y⁴ is OH when X⁴ is O, and m is an integer of 30 or more.)

In this case, since the terminal OH group or SH group is bonded to the alkylene group in the modified polyimide, the reducing power is further increased.

A varnish of the present invention includes a resin for forming an insulating film and a polar solvent, in which the resin for forming an insulating film is the resin for forming an insulating film described above.

According to the varnish of the present invention, since the varnish includes the resin for forming an insulating film described above as a resin for forming an insulating film, it is possible to form an insulating film having excellent adhesiveness to a conductor even when stored for a long period of time in the high temperature environment.

A method for producing an insulated conductor of the present invention using the varnish described above includes a step of applying the above-described varnish to a surface of a conductor to form a coating layer on the surface of the conductor and a step of heating the coating layer to produce an insulating film and bake the insulating film on the conductor.

According to the method for producing an insulated conductor of the present invention, since an insulating film produced using the varnish described above is baked on the conductor, an insulated conductor having excellent adhesiveness between the conductor and the insulating film even when stored for a long period of time in the high-temperature environment can be produced.

An electrodeposition dispersion of the present invention includes a resin for forming an insulating film, a polar solvent, water, a poor solvent, and a base, in which the resin for forming an insulating film is the resin for forming an insulating film described above.

According to the electrodeposition dispersion of the present invention, since the electrodeposition dispersion includes the resin for forming an insulating film described above as a resin for forming an insulating film, it is possible to form an insulating film having excellent adhesiveness to a conductor even when stored for a long period of time in the high temperature environment.

A method for producing an insulated conductor of the present invention using the electrodeposition dispersion described above includes a step of electrodepositing the electrodeposition dispersion described above to a surface of a conductor to form an electrodeposition layer on the surface of the conductor and a step of heating the electrodeposition layer to produce an insulating film and bake the insulating film on the conductor.

According to the method for producing an insulated conductor of the present invention, since an insulating film produced using the electrodeposition dispersion described above is baked on the conductor, an insulated conductor having excellent adhesiveness between the conductor and the insulating film even when stored for a long period of time in the high-temperature environment can be produced.

### Advantageous Effects of Invention

According to the present invention, it is possible to provide a resin for forming an insulating film capable of forming an insulating film having excellent adhesiveness to a conductor even when stored for a long period of time in the high temperature environment, a varnish, an electrodeposition dispersion, and a method for producing an insulated conductor.

### BEST MODE FOR CARRYING OUT THE INVENTION

Hereinafter, a resin for forming an insulating film, a varnish, an electrodeposition dispersion, and a method for producing an insulated conductor according to the embodiment of the present invention will be described.

In the present embodiment, the "insulated conductor" is a conductor (an object to be coated) having an insulating film formed on the surface of the conductor. Examples of the conductor include a copper wire, an aluminum wire, a steel wire, a copper alloy wire, and an aluminum alloy wire. The thickness of the insulating film is usually in a range of 10 µm or more and 70 µm or less.

### <Resin for forming insulating film>

A resin for forming an insulating film of the present embodiment includes at least the features mentioned under [item 1] above. That is, the resin for forming an insulating film includes an OH group-modified polyamide-imide having a terminal OH group, an SH group-modified polyamide-imide having a terminal SH group, an OH group-modified polyimide having a terminal OH group, and an SH group-modified polyimide having a terminal SH group. These resins may be used alone or a combination of two or more thereof are used.

The OH group or the SH group which is the terminus of the modified polyamide-imide and the modified polyimide acts as a reducing agent, reduces an oxide generated on the surface of a conductor, and suppresses a decrease in adhesiveness of an insulating film due to oxidation of the conductor. The amount of the OH group or SH group contained in the modified polyamide-imide and the modified polyimide is preferably in a range of 0.005 mol or more and 0.02 mol or less per to 100 g of the modified polyamide-imide and the modified polyimide. The insulating film formed by using the modified polyamide-imide and the modified polyimide containing the OH group or SH group in the above range can more reliably suppress the oxidation of the conductor in the high temperature environment.

The modified polyamide-imide and the modified polyimide have a weight average molecular weight in a range of 10 × 10⁴ or more and 30 × 10⁴ or less and a number average molecular weight in a range of 2 × 10⁴ or more and 5 × 10⁴ or less. In the insulating film formed by using the modified polyamide-imide and the modified polyimide having the weight average molecular weight and the number average molecular weight in the above range, the volatilization thereof hardly occurs even when stored for a long period of time in the high temperature environment. In addition, in a case where the weight average molecular weight is less than 10 × 10⁴ and the number average molecular weight is less than 2 × 10⁴, it may be difficult to form an insulating film having no foaming and excellent film thickness uniformity. On the other hand, since it is difficult to synthesize a modified polyamide-imide and a modified polyimide having a weight average molecular weight exceeding 30 × 10⁴ and a number average molecular weight exceeding 5 × 10⁴, the production cost may be increased.

### (Modified polyamide-imide having terminal OH group or terminal SH group)

The modified polyamide-imide having a terminal OH group or a terminal SH group is preferably obtained by bonding an NCO group of a polyamide-imide having a terminal NCO group and an OH group of a linear diol or an SH group of a linear dithiol. That is, a modified polyamide-imide preferably has an OH group derived from a linear diol or an SH group derived from an SH group of a linear dithiol at the terminus of the modified polyamide-imide. The OH group derived from a linear diol or the SH group derived from an SH group of a linear dithiol is liable to release hydrogen. Therefore, the modified polyamide-imide having an OH group derived from a linear diol or an SH group derived from an SH group of a linear dithiol has high reducing power.

The polyamide-imide having a terminal NCO group can be produced by an isocyanate method. The isocyanate method is a method of reacting trimellitic anhydride with a diisocyanate compound. The polyamide-imide produced by the isocyanate method has an NCO group derived from a diisocyanate compound at a terminus of the polyamide-imide.

A linear diol is a compound having a structure in which one hydroxy group is introduced at two carbon atoms of a linear hydrocarbon. The linear diol preferably has carbon atoms in a range of 2 to 12. Examples of the linear diols include 1,2-ethanediol, 1,3-propanediol, 1,4-butanediol, 1,5-pentanediol, 1,6-hexanediol, 1,7-heptanediol, and 1,8-octanediol.

A linear dithiol is a compound having a structure in which one thiol group is introduced at two carbon atoms of a linear hydrocarbon. The linear dithiol preferably has carbon atoms in a range of 2 to 12. Examples of the linear dithiols include 1,2-ethanedithiol, 1,3-propanedithiol, 1,4-butanedithiol, 1,5-pentanedithiol, 1,6-hexanedithiol, 1,7-heptanedithiol, and 1,8-octanedithiol.

As a method of bonding an NCO group of a polyamide-imide and an OH group of a linear diol, for example, a method in which the polyamide-imide and the linear diol are mixed in a solvent and the obtained mixture is heated at a temperature of 50°C or more and 80°C or less can be used. In addition, as a method of bonding an NCO group of a polyamide-imide and an SH group of a linear dithiol, for example, a method in which the polyamide-imide and the linear dithiol are mixed in a solvent and the obtained mixture is heated at a temperature of 50°C or more and 80°C or less can be used.

The modified polyamide-imide having a terminal OH group or a terminal SH group is a compound represented by the following General Formula (1). An OH group or an SH group bonded to an alkylene group having carbon atoms in a range of 2 to 12 is liable to release hydrogen. For this reason, the modified polyamide-imide having an OH group or SH group bonded to an alkylene group having carbon atoms in a range of 2 to 12 has high reducing power.

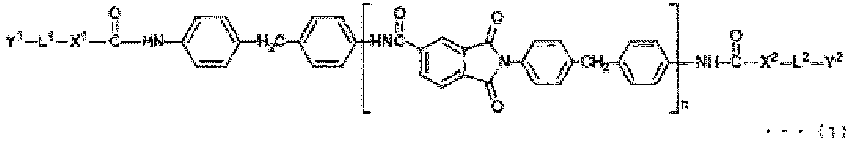

In the formula, X¹ and X² are each independently O or S. X¹ and X² are preferably the same.

L¹ and L² are each independently an alkylene group having carbon atoms in a range of 2 to 12. L¹ and L² are preferably the same.

Y¹ is SH when X¹ is S and Y¹ is OH when X¹ is O, and Y² is SH when X² is S and Y² is OH when X² is O.

### n is an integer of 30 or more.

### (Modified polyimide having terminal OH group or terminal SH group)

The modified polyimide having a terminal OH group or a terminal SH group is preferably obtained by bonding an NCO group of a polyimide having a terminal NCO group and an OH group of a linear diol or an SH group of a linear dithiol. That is, a modified polyimide preferably has an OH group derived from a linear diol or an SH group derived from an SH group of a linear dithiol at the terminus of the modified polyimide. The OH group derived from a linear diol or the SH group derived from an SH group of a linear dithiol is liable to release hydrogen. Therefore, the modified polyimide having an OH group derived from a linear diol or an SH group derived from an SH group of a linear dithiol has high reducing power.

The polyimide having a terminal NCO group can be produced by an isocyanate method. The isocyanate method is a method of reacting a carboxylic dianhydride with a diisocyanate compound. The polyimide produced by the isocyanate method has an NCO group derived from a diisocyanate compound at a terminus of the polyimide.

As the linear diol and the linear dithiol to be bonded to the NCO group of the polyimide, the same compounds as in the case of the modified polyamide-imide can be used.

As a method of bonding an NCO group of a polyimide and an OH group of a linear diol, for example, a method in which the polyimide and the linear diol are mixed in a solvent and the obtained mixture is heated at a temperature of 50°C or more and 80°C or less can be used. In addition, as a method of bonding an NCO group of a polyimide and an SH group of a linear dithiol, for example, a method in which the polyimide and the linear dithiol are mixed in a solvent and the obtained mixture is heated at a temperature of 50°C or more and 80°C or less can be used.

The modified polyimide having a terminal OH group or a terminal SH group is a compound represented by the following General Formula (2). An OH group or an SH group bonded to an alkylene group having carbon atoms in a range of 2 to 12 is liable to release hydrogen. For this reason, the modified polyimide having an OH group or SH group bonded to an alkylene group having carbon atoms in a range of 2 to 12 has high reducing power.

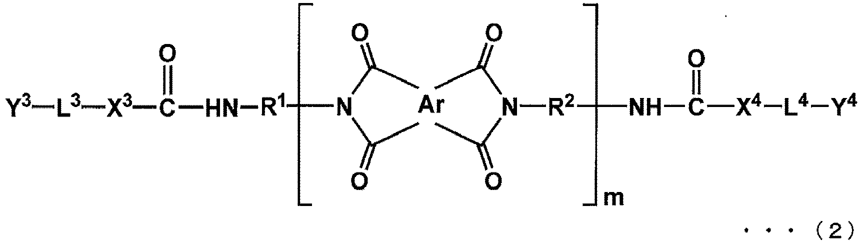

In the formula, Ar is a tetravalent aromatic group.

R¹ and R² are each independently a divalent organic group, or a group in which a divalent aromatic group is linked with an alkylene group having 1 to 12 carbon atoms, - CO-, -O-, -NR- (where R is a hydrogen atom or an alkyl group having 1 to 8 carbon atoms) that may be substituted with an alkyl group having 1 to 8 carbon atoms, -S-, -SO- or -SO²-. The divalent organic group is preferably a divalent aromatic group or a group in which a divalent aromatic group and a divalent linking group are combined. The divalent aromatic group is preferably a phenylene group. The group in which a divalent aromatic group and a divalent linking group are combined is preferably a group in which a divalent aromatic group, a divalent linking group, and a divalent aromatic group are linked in this order.

X³ and X⁴ are each independently O or S. X³ and X⁴ are preferably the same.

L³ and L⁴ are each independently an alkylene group having carbon atoms in a range of 2 to 12. L³ and L⁴ are preferably the same.

Y³ is SH when X³ is S and Y³ is OH when X³ is O, and Y⁴ is SH when X⁴ is S and Y⁴ is OH when X⁴ is O.

m is an integer of 30 or more.

### <Varnish>

A varnish of the present embodiment includes the above-described resin for forming an insulating film of the present embodiment and a polar solvent. The resin for forming an insulating film is preferably dissolved in a polar solvent.

The polar solvent is not particularly limited as long as it can dissolve the modified polyamide-imide and the modified polyimide. Examples of the polar solvents include aprotic solvents such as N,N-dimethylacetamide, N,N-dimethylformamide, propylene carbonate, dimethylsulfoxide, 4-butyrolactone, N-methyl-2-pyrrolidone, and 1,3-dimethyl-2-imidazolidinone.

The mixing ratio of the resin for forming an insulating film and the polar solvent contained in the varnish is preferably 5 to 30 / 70 to 95 (= Resin for forming insulating film / Polar solvent) in mass ratio. In addition, the varnish preferably has a viscosity of 1,000 to 10,000 mPa·s at 25°C.

The varnish may include an additive as long as the effects of the present invention are not impaired. Examples of the additives include a stabilizer, a plasticizer, an antifoaming agent, and a flame retardant.

### <Method for producing insulated conductor using varnish>

The above varnish can be used as a raw material when producing an insulated conductor by a coating method. A method for producing an insulated conductor of the present embodiment using the varnish includes a step (application step) of applying the varnish to a surface of a conductor to form a coating layer on the surface of the conductor and a step (heating step) of heating the coating layer to produce an insulating film and bake the insulating film on the conductor.

In the application step, the method for applying the varnish on the surface of the conductor is not particularly limited, and a method generally used as a method for applying a varnish such as an immersion method (dipping method) and a spray method can be used.

In the heating step, the heating temperature of the coating layer is preferably in a range of 200°C or higher and 600°C or lower.

### <Electrodeposition dispersion>

An electrodeposition dispersion of the present embodiment includes the above-described resin for forming an insulating film of the present embodiment, a polar solvent, water, a poor solvent, and a base. The poor solvent is a solvent in which the resin for forming an insulating film is difficult to be soluble. Since the electrodeposition dispersion contains water and the poor solvent, the resin for forming an insulating film is dispersed in the electrodeposition dispersion in the form of fine particles. The particles of the resin for forming an insulating film preferably have an average particle diameter of 400 nm or less. The average particle size of the resin particles for forming an insulating film is a volume-based average particle size measured using a dynamic light scattering particle size distribution analyzer (LB-550, manufactured by HORIBA, Ltd.).

The polar solvent used in the electrodeposition dispersion is preferably able to solubilize the resin for forming an insulating film and hydrophilic. Examples of the polar solvents include N,N-dimethylacetamide, N,N-dimethylformamide, propylene carbonate, dimethylsulfoxide, 4-butyrolactone, N-methyl-2-pyrrolidone, and 1,3-dimethyl-2-imidazolidinone.

Examples of the poor solvent include isopropyl alcohol, 1-methoxy-2-propanol, cyclohexanone, and the like.

Examples of the base include N,N-dimethylaminoethanol, triethylamine, tripropylamine, triethanolamine, imidazole, and the like.

The mixing ratio of the resin for forming an insulating film, the polar solvent, water, the poor solvent, and the base contained in the electrodeposition dispersion is preferably 1 to 20 / 60 to 80 / 10 to 20 / 5 to 15 / 0.01 to 0.5 (= Resin for forming insulating film / Polar solvent / Water / Poor solvent / Base) in mass ratio. In addition, the electrodeposition dispersion preferably has a viscosity of 3 to 20 mPa·s at 25°C.

The electrodeposition dispersion is preferably prepared by adding water dropwise to a mixture containing the resin for forming an insulating film, the polar solvent, the poor solvent, and basic. The dropping of water is preferably performed while stirring the mixture at a speed of 8,000 rpm or more and 12,000 rpm or less.

The electrodeposition dispersion may include an additive as long as the effects of the present invention are not impaired. Examples of the additives include a stabilizer, a plasticizer, an antifoaming agent, and a flame retardant.

### <Method for producing insulated conductor using electrodeposition dispersion>

The above electrodeposition dispersion can be used as a raw material when producing an insulated conductor by an electrodeposition method. A method for producing an insulated conductor of the present embodiment using the electrodeposition dispersion includes a step (electrodeposition step) of electrodepositing the electrodeposition dispersion to a surface of a conductor to form an electrodeposition layer on the surface of the conductor and a step (heating step) of heating the electrodeposition layer to produce an insulating film and bake the insulating film on the conductor.

In the electrodeposition step, as a method for electrodepositing the electrodeposition dispersion on the surface of the conductor, a method in which a counter electrode and a conductor are immersed in the electrodeposition dispersion, and then a direct voltage is applied using the counter electrode as a negative electrode and the conductor as a positive electrode can be used. The direct voltage to be applied is preferably in a range of 1 V or more and 600 V or less. The temperature of the electrodeposition dispersion when applying the direct voltage is preferably in a range of 5°C or higher and 60°C or lower. The application time of the direct voltage is preferably in a range of 0.01 seconds or more and 30 seconds or less.

In the heating step, the heating temperature of the electrodeposition layer is preferably in a range of 200°C or higher and 600°C or lower.

According to the resin for forming an insulating film of the present embodiment having a configuration described above, a modified polyamide-imide and a modified polyimide have high reducing power. Therefore, by coating a conductor with an insulating film formed using the resin for forming an insulating film, it is possible to suppress the oxidation of the conductor in the high temperature environment, and, as a result, it is possible to suppress a decrease in adhesiveness between the conductor and the insulating film due to the oxidation of the conductor. In addition, because the modified polyamide-imide and the modified polyimide have a high boiling point and high stability in the high temperature environment, compared with compounds conventionally used as a reducing agent, the effect of suppressing the oxidation of the conductor is difficult to be lost even when stored for a long period of time in the high temperature environment. As a result, according to the resin for forming an insulating film of the present embodiment, it is possible to form an insulating film having excellent adhesiveness to a conductor even when stored for a long period of time in the high temperature environment.

In addition, in the resin for forming an insulating film of the present embodiment, the modified polyamide-imide and the modified polyimide have a weight average molecular weight in a range of 10 × 10⁴ or more and 30 × 10⁴ or less and a high number average molecular weight in a range of 2 × 10⁴ or more and 5 × 10⁴ or less, and thus the volatilization thereof hardly occurs even when stored for a long period of time in the high temperature environment. As a result, it is possible to more reliably form an insulating film having excellent adhesiveness to a conductor even when stored for a long period of time in the high temperature environment.

According to the varnish of the present embodiment, since the varnish includes the resin for forming an insulating film described above as a resin for forming an insulating film, it is possible to form an insulating film having excellent adhesiveness to a conductor even when stored for a long period of time in the high temperature environment. In addition, according to the method for producing an insulated conductor of the present embodiment using this varnish, since an insulating film produced using the varnish of the present embodiment described above is baked on the conductor, an insulated conductor having excellent adhesiveness between the conductor and the insulating film even when stored for a long period of time in the high temperature environment can be produced.

According to the electrodeposition dispersion of the present embodiment, since the varnish includes the resin for forming an insulating film described above as a resin for forming an insulating film, it is possible to form an insulating film having excellent adhesiveness to a conductor even when stored for a long period of time in the high temperature environment. In addition, in the method for producing an insulated conductor of the present embodiment using the electrodeposition dispersion, the insulating film generated using the above-described electrodeposition dispersion of the present embodiment is baked on the conductor, so that it is possible to produce an insulated conductor having excellent adhesiveness between the conductor and the insulating film even if it is stored for a long period of time in the high temperature environment.

The embodiment of the present invention has been described as above, but the present invention is not limited thereto and can be appropriately changed without departing from the technical idea of the present invention.

For example, in the present embodiment, although the modified polyamide-imide and the modified polyimide have a weight average molecular weight in a range of 10 × 10⁴ to 30 × 10⁴ and a number average molecular weight in a range of 2 × 10⁴ to 5 × 10⁴, it is not necessary to satisfy both the weight average molecular weight and the number average molecular weight in the above range. However, it is preferable that either the weight average molecular weight or the number average molecular weight satisfies the above range.

### EXAMPLES

Hereinafter, the operation effect of the present invention will be described according to Examples.

### <Example 1>

### (1) Synthesis of polyamide-imide having a terminal NCO group

In a 2 liter four-necked flask equipped with a stirrer, a cooling tube, a nitrogen inlet tube, and a thermometer, 122 g (1.23 mol) of N-methyl-2-pyrrolidone (NMP), 69 g (0.28 mol) of 4,4'-diphenylmethane diisocyanate, and 52 g (0.27 mol) of trimellitic anhydride were prepared and stirred to obtain a mixture. The obtained mixture was heated to 180°C with stirring and reacted at this temperature with stirring for 1.5 hours to form a polyamide-imide (PAI) having a terminal NCO group. After adding 336 g (3.39 mol) of N-methyl-2-pyrrolidone for dilution, the mixture was cooled to 60°C to obtain a polyamide-imide solution (PAI / NMP = 20% by mass / 80% by mass).

### (2) Synthesis of OH group-modified polyamide-imide

1.6 g (0.01 mol) of 1,6-hexanediol was added to the polyamide-imide solution obtained in the above (1) and stirred at 60°C for 12 hours to produce an OH group-modified polyamide-imide by bonding an NCO group of the polyamide-imide and 1,6-hexanediol to form an urethane bonding, thereby obtaining an OH group-modified polyamide-imide solution.

### (3) Preparation of electrodeposition dispersion

25 g of the OH group-modified polyamide-imide solution obtained in the above (2) was further diluted with 50 g of 1,3-dimethyl-2-imidazolidinone. Next, 8 g of 1-methoxy-2-propanol as a poor solvent and 0.2 g of tripropylamine as a base were added thereto and well stirred to obtain a mixture. While stirring the obtained mixture at a high speed of 10,000 rpm, 17 g of water was added dropwise to obtain an electrodeposition dispersion in which fine particles of the OH group-modified polyamide-imide were dispersed.

### (4) Manufacture of insulated copper wire

A copper sheet of a counter electrode and a copper wire (rounded wire) that was an object to be coated were immersed in the electrodeposition dispersion obtained in the above (3), and then the copper sheet was brought into contact with a negative electrode and the copper wire was brought into contact with a positive electrode. Next, a direct voltage of 500 V was applied between the copper sheet (negative electrode) and the copper wire (positive electrode) to form an electrodeposition layer on the surface of the copper wire. Then, the copper wire having the electrodeposition layer was allowed to be left in a muffle furnace at 250°C for 3 minutes to perform drying and seizing, thereby manufacturing an insulated copper wire. The obtained insulated copper wire was coated with a polyamide-imide insulating film having a film thickness of 40 µm and having excellent film thickness uniformity without foaming.

### <Example 2>

An OH group-modified polyamide-imide solution was prepared in the same manner as in Example 1 except that 0.76 g (0.01 mol) of 1,3-propanediol was added to the polyamide-imide solution instead of 1,6-hexanediol in Example 1 (2). Then, an electrodeposition dispersion was prepared in the same manner as in Example 1 except that 25 g of the obtained OH group-modified polyamide-imide solution was used in Example 1 (3), and an insulated copper wire was manufactured using the electrodeposition dispersion. The obtained insulated copper wire was coated with a polyamide-imide insulating film having a film thickness of 40 µm and having excellent film thickness uniformity without foaming.

### <Comparative Example 1>

An electrodeposition dispersion was prepared in the same manner as in Example 1 except that the polyamide-imide solution obtained in Example 1(1) was used instead of the OH group-modified polyamide-imide solution in Example 1 (3), and an insulated copper wire was manufactured using the electrodeposition dispersion. The obtained insulated copper wire was coated with a polyamide-imide insulating film having a film thickness of 40 µm and having excellent film thickness uniformity without foaming.

### <Comparative Example 2>

An electrodeposition dispersion was prepared in the same manner as in Example 1, except that the polyamide-imide solution obtained in Example 1(1) was used instead of the OH group-modified polyamide-imide solution and that 3 g of geraniol was added as an additive together with 8 g of 1-methoxypropanol and 0.2 g of tripropylamine after further diluting 25 g of the polyamide-imide resin solution with 50 g of 1,3-dimethyl-2-imidazolidinone in Example 1 (3), and an insulated copper wire was manufactured using the electrodeposition dispersion. The obtained insulated copper wire was coated with a polyamide-imide insulating film having a film thickness of 40 µm and having excellent film thickness uniformity without foaming.

### [Molecular weight of polyamide-imide]

The weight average molecular weight and the number average molecular weight of the OH group-modified polyamide-imides used in Examples 1 and 2 and the polyamide-imides used in Comparative Examples 1 and 2 were measured using a highspeed GPC apparatus (HLC-8320GPC manufactured by Tosoh Corporation) and a column having an amphipathic exclusion limit molecular weight of 4 × 10⁷ or more and were determined by converting the value measured by a suggestion refractometer in terms of the standard polystyrene. In addition, a mobile phase in which lithium bromide and phosphoric acid were added as an adsorption inhibitor to dimethylacetamide was used.

### [Evaluation of heat resistance of insulated copper wire]

An insulating film was formed on a rectangular copper wire (length 300 mm × width 10 mm) using the electrodeposition dispersions prepared in Examples 1 and 2 and Comparative Examples 1 and 2 to obtain an insulated copper wire. The insulated copper wire was manufactured in the same manner as in Example 1 (4) except that a rectangular copper wire was used as a copper wire. Table 1 shows the thickness of the insulating film of the obtained insulated conductive wires.

Next, the obtained insulated copper wire was heated at 300°C for 3 minutes, 5 minutes, 10 minutes, or 30 minutes. For the insulated copper wire (test piece) after heating, the adhesiveness (floating length) between the rectangular copper wire and the insulating film and the elastic modulus of the insulating film were measured by the following methods. Table 1 shows the results of the measurements.

The adhesiveness was measured in accordance with the method specified in "5.5 Adhesion test" of JISC3216-3 (Magnet wire test method - Part 3: Mechanical properties). A nick was introduced from the insulating film to the surface of the copper wire at the center of the test piece in the longitudinal direction of the test piece (length 300mm × width 10mm). Next, the test piece was extended at a speed of 5 ± 1 mm per second using a table-type precise universal testing machine (Autograph AGS-10 kNX, manufactured by Shimadzu Corporation) until the extension rate reached 15%. Then, the length (floating length) of the insulating film floating from the copper wire was measured by observing the periphery of the nick introduced in the test piece. The measurement of the floating length was performed for the entire surface of the test piece, and the maximum length among the floating lengths measured for each surface is shown in Table 1.

The elastic modulus was measured according to the method described in JIS K7127 (Plastic - Test method for tensile properties - Part 3: Test condition of film and sheet). Apiece of the insulating film (length 150 mm, width 10 mm) was peeled from the test piece (length 300 mm × width 10 mm). Then, the elastic modulus of the peeled piece of the insulating film was measured at a test speed of 5 mm/min.

**[Table 1]**

| | Electrodeposition dispersion | | | | Thickness of insulating film (µm) | Evaluation of heat resistance of insulated copper wire | | | | | | | | | |
|---|---|---|---|---|---|---|---|---|---|---|---|---|---|---|---|
| | Polyamide-imide | | | Additive | | 300°C, 3 minutes | | 300°C, 5 minutes | | 300°C, 10 minutes | | 300°C, 30 minutes | | 300°C, 60 minutes | |
| | Terminal group | Number average molecular weigh | Weight average molecular weight | | | Adhesiveness (floating length) (mm) | Elastic modulus (MPa) | Adhesiveness (floating length) (mm) | Elastic modulus (MPa) | Adhesiveness (floating length) (mm) | Elastic modulus (MPa) | Adhesiveness (floating length) (mm) | Elastic modulus (MPa) | Adhesiveness (floating length) (mm) | Elastic modulus (MPa) |
| Example 1 | OH group | 3.1×10⁴ | 19.0×10⁴ | Not included | 38 | 0.2 | 3000 | 0.6 | 3100 | 0.7 | 3200 | 12 | 3200 | 1.5 | 3200 |
| Example 1 | OH group | 2.9×10⁴ | 21.7×10⁴ | Not included | 41 | 0.3 | 3200 | 0.6 | 3300 | 0.6 | 3300 | 12 | 3400 | 1.4 | 3400 |
| Comparative Example 1 | NCO group | 2.5×10⁴ | 25.6×10⁴ | Not included | 41 | 20< | 3000 | 20< | 3300 | 20< | 3300 | 20< | 3300 | 20< | 3300 |
| Comparative Example 2 | NCO group | 2.5× 10⁴ | 25.6×10⁴ | Included (Geraniol) | 37 | 0.5 | 3100 | 1.6 | 3300 | 5.4 | 3400 | 20< | 3400 | 20< | 3400 |

In the insulated copper wire manufactured using the electrodeposition dispersion of Comparative Example 1, which contained a polyamide-imide having a terminal NCO group, the floating length of the insulating film was 20 mm or more when heated at 300°C for 3 minutes, and the adhesiveness between the rectangular copper wire and the insulating film in the high temperature environment was greatly reduced.

In the insulated copper wire manufactured using the electrodeposition dispersion of Comparative Example 2, which contained a polyamide having a terminal NCO group and geraniol, the floating length of the insulating film was 0.5 mm when heated at 300°C for 3 minutes. However, the floating length of the insulating film when heated at 300°C for 30 minutes was 20 mm or more, and the time during which the adhesiveness between the rectangular copper wire and the insulating film could be maintained was short.

On the other hand, in the insulated copper wire manufactured using the electrodeposition dispersions of Examples 1 and 2, which contained an OH group-modified polyamide-imide having a terminal OH group, the floating length of the insulating film was 1.5 mm or less when heated at 300°C for 60 minutes. In addition, the insulated copper wire manufactured using the electrodeposition dispersions of Examples 1 and 2 had the same elastic modulus as Comparative Examples 1 and 2, and the time during which the adhesiveness between the rectangular copper wire and the insulating film could be maintained while maintaining the elastic modulus became significantly long.

### Industrial Applicability

It is possible to provide a resin for forming an insulating film capable of forming an insulating film having excellent adhesiveness to a conductor even when stored for a long period of time in the high temperature environment, a varnish, an electrodeposition dispersion, and a method for producing an insulated conductor.

## Claims

1. A resin for forming an insulating film comprising at least one of a modified polyamide-imide having a terminal OH group or a terminal SH group and a modified polyimide having a terminal OH group or a terminal SH group,
wherein the modified polyamide-imide is a compound represented by the following General Formula (1): 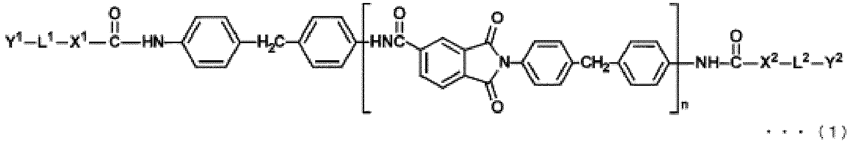 wherein, in the formula,
X¹ and X² are each independently O or S,
L¹ and L² are each independently an alkylene group having carbon atoms in a range of 2 to 12,
Y¹ is SH when X¹ is S and Y¹ is OH when X¹ is O,
Y² is SH when X² is S and Y² is OH when X² is O, and
n is an integer of 30 or more, and
wherein the modified polyimide is a compound represented by the following 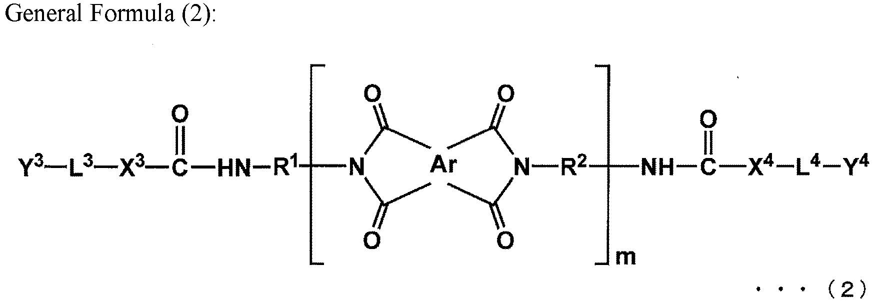 wherein, in the formula,
Ar is a tetravalent aromatic group,
R¹ and R² are each independently a divalent aromatic group, or a group in which a divalent aromatic group is linked with an alkylene group having 1 to 12 carbon atoms, - CO-, -O-, -NR- (where R is a hydrogen atom or an alkyl group having 1 to 8 carbon atoms) that may be substituted with an alkyl group having 1 to 8 carbon atoms, -S-, -SO- or -SO²-,
X³ and X⁴ are each independently O or S,
L³ and L⁴ are each independently an alkylene group having carbon atoms in a range of 2 to 12,
Y³ is SH when X³ is S and Y³ is OH when X³ is O,
Y⁴ is SH when X⁴ is S and Y⁴ is OH when X⁴ is O, and
m is an integer of 30 or more.

2. The resin for forming an insulating film according to claim 1,
wherein the modified polyamide-imide and the modified polyimide have a weight average molecular weight in a range of 10 × 10⁴ to 30 × 10⁴, or a number average molecular weight in a range of 2 × 10⁴ to 5 × 10⁴.

3. The resin for forming an insulating film according to claim 1 or 2,
wherein the modified polyamide-imide is obtained by bonding an NCO group of a polyamide-imide having a terminal NCO group and an OH group of a linear diol or an SH group of a linear dithiol.

4. The resin for forming an insulating film according to claim 1 or 2,
wherein the modified polyimide is obtained by bonding an NCO group of a polyimide having a terminal NCO group and an OH group of a linear diol or an SH group of a linear dithiol.

5. A varnish comprising:
a resin for forming an insulating film; and
a polar solvent,
wherein the resin for forming an insulating film is the resin for forming an insulating film according to any one of claims 1 to 4.

6. A method for producing an insulated conductor comprising:
a step of applying the varnish according to claim 5 to a surface of a conductor to form a coating layer on the surface of the conductor; and
a step of heating the coating layer to produce an insulating film and bake the insulating film on the conductor.

7. An electrodeposition dispersion comprising:
a resin for forming an insulating film;
a polar solvent;
water;
a poor solvent; and
a base,
wherein the resin for forming an insulating film is the resin for forming an insulating film according to any one of claims 1 to 4.

8. A method for producing an insulated conductor comprising:
a step of electrodepositing the electrodeposition dispersion according to claim 7 to a surface of a conductor to form an electrodeposition layer on the surface of the conductor; and
a step of heating the electrodeposition layer to produce an insulating film and bake the insulating film on the conductor.

## Patentansprüche

1. Ein Harz zur Herstellung eines Isolierbeschichtungsfilms, das mindestens eines von einem modifizierten Polyamid-Imid mit einer terminalen OH-Gruppe oder einer terminalen SH-Gruppe, und einem modifizierten Polyimid mit einer terminalen OH-Gruppe oder einer terminalen SH-Gruppe umfasst,
wobei es sich bei dem modifizierten Polyamid-Imid um eine Verbindung handelt, die durch die folgende Allgemeine Formel (1) dargestellt wird: 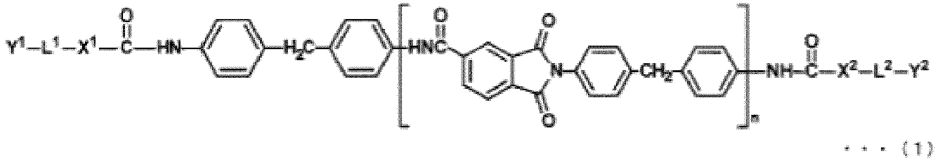 worin, in der Formel,
X¹ und X² jeweils in unabhängiger Weise O oder S sind,
L¹ and L² jeweils in unabhängiger Weise eine Alkylengruppe, die eine Anzahl von Kohlenstoffatomen in dem Bereich von 2 bis 12 aufweist, sind,
Y¹ SH ist wenn X¹ S ist, und Y¹ OH ist wenn X¹ O ist,
Y² SH ist wenn X² S ist, und Y² OH ist wenn X² O ist, und
n eine ganze Zahl von 30 oder mehr ist, und
wobei es sich bei dem modifizierten Polyimid um eine Verbindung handelt, die durch die folgende Allgemeine Formel (2) dargestellt wird: 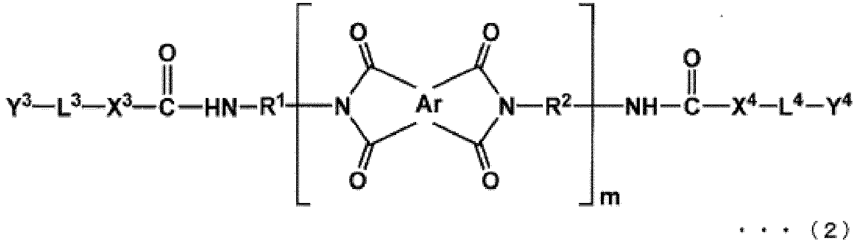 worin, in der Formel,
Ar eine vierwertige aromatische Gruppe ist,
R¹ und R² jeweils in unabhängiger Weise eine zweiwertige aromatische Gruppe sind, oder eine Gruppe, in der eine zweiwertige aromatische Gruppe mit einer Alkylengruppe, die 1 bis 12 Kohlenstoffatome aufweist, -CO-, -O-, -NR- (wobei R ein Wasserstoffatom oder eine Alkylgruppe ist, die 1 bis 8 Kohlenstoffatome aufweist), das mit einer Alkylgruppe mit 1 bis 8 Kohlenstoffatomen substituiert sein kann, -S-, -SO- oder -SO²- verbunden ist,
X³ und X⁴ jeweils in unabhängiger Weise O oder S sind,
L³ und L⁴ jeweils in unabhängiger Weise eine Alkylengruppe, die eine Anzahl von Kohlenstoffatomen in dem Bereich von 2 bis 12 aufweist, sind,
Y³ SH ist wenn X³ S ist, und Y³ OH ist wenn X³ O ist,
Y⁴ SH ist wenn X⁴ S ist, und Y⁴ OH ist wenn X⁴ O ist, und
m eine ganze Zahl von 30 oder mehr ist.

2. Das Harz zur Herstellung eines Isolierbeschichtungsfilms gemäß Anspruch 1,
wobei das modifizierte Polyamid-Imid und das modifizierte Polyimid ein gewichtsmittleres Molekulargewicht in einem Bereich von 10 × 10⁴ bis 30 × 10⁴ aufweisen, oder ein zahlenmittleres Molekulargewicht in einem Bereich von 2 × 10⁴ bis 5 × 10⁴.

3. Das Harz zur Herstellung eines Isolierbeschichtungsfilms gemäß Anspruch 1 oder 2,
wobei das modifizierte Polyamid-Imid durch die Bindung einer NCO-Gruppe eines Polyamid-Imids, das eine terminale NCO-Gruppe aufweist, und einer OH-Gruppe eines linearen Diols oder einer SH-Gruppe eines linearen Dithiols erhalten wird.

4. Das Harz zur Herstellung eines Isolierbeschichtungsfilms gemäß Anspruch 1 oder 2,
wobei das modifizierte Polyimid durch die Bindung einer NCO-Gruppe eines Polyimids, das eine terminale NCO-Gruppe aufweist, und einer OH-Gruppe eines linearen Diols oder einer SH-Gruppe eines linearen Dithiols erhalten wird.

5. Ein Lack, umfassend:
ein Harz zur Herstellung eines Isolierbeschichtungsfilms; und
ein polares Lösungsmittel,
wobei es sich bei dem Harz zur Herstellung eines Isolierbeschichtungsfilms um das Harz zur Herstellung eines Isolierbeschichtungsfilms gemäß einem der Ansprüche 1 bis 4 handelt.

6. Ein Verfahren zur Herstellung eines isolierten Leiters, umfassend:
einen Schritt des Auftragens des Lacks gemäß Anspruch 5 auf eine Oberfläche eines Leiters, um eine Deckschicht auf der Oberfläche des Leiters zu bilden; und
einen Schritt des Erhitzens der Deckschicht, um einen Isolierbeschichtungsfilm herzustellen und den Isolierbeschichtungsfilm auf dem Leiter zu brennen.

7. Eine Elektroabscheidungsdispersion, umfassend:
ein Harz zur Herstellung eines Isolierbeschichtungsfilms;
ein polares Lösungsmittel;
Wasser;
ein schlechtes Lösungsmittel; und
eine Base,
wobei das Harz zur Herstellung eines Isolierbeschichtungsfilms das Harz zur Herstellung eines Isolierbeschichtungsfilms gemäß einem der Ansprüche 1 bis 4 ist.

8. Ein Verfahren zur Herstellung eines isolierten Leiters, umfassend:
einen Schritt der elektrolytischen Abscheidung der Elektroabscheidungsdispersion gemäß Anspruch 7 auf einer Oberfläche eines Leiters, um eine elektrolytisch abgeschiedene Schicht auf der Oberfläche des Leiters herzustellen; und
einen Schritt des Erhitzens der elektrolytisch abgeschiedenen Schicht, um einem Isolierbeschichtungsfilm herzustellen und den Isolierbeschichtungsfilm auf dem Leiter zu brennen.

## Revendications

1. Résine pour former un film isolant comprenant au moins un parmi un polyamide-imide modifié ayant un groupe OH terminal ou un groupe SH terminal et un polyimide modifié ayant un groupe OH terminal ou un groupe SH terminal,
dans laquelle le polyamide-imide modifié est un composé représenté par la formule générale suivante (1): 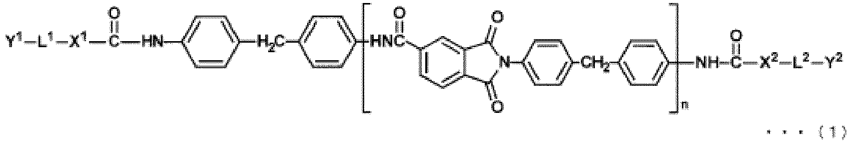 où, dans la formule,
X¹ et X² sont chacun indépendamment O ou S,
L¹ et L² sont chacun indépendamment un groupe alkylène ayant des atomes de carbone dans une gamme de 2 à 12,
Y¹ est SH lorsque X¹ est S et Y¹ est OH lorsque X¹ est O,
Y² est SH lorsque X² est S et Y² est OH lorsque X² est O, et
n est un nombre entier de 30 ou plus, et
dans laquelle le polyimide modifié est un composé représenté par la formule générale suivante (2) : 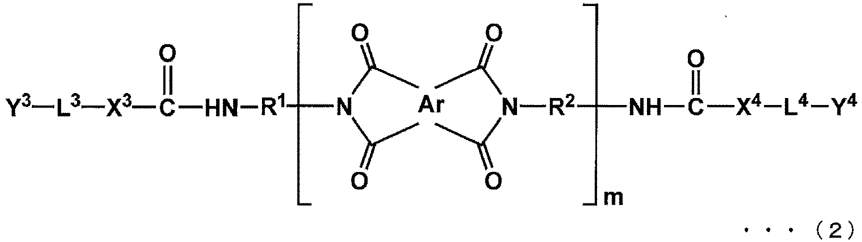 où, dans la formule,
Ar est un groupe aromatique tétravalent,
R¹ et R² sont chacun indépendamment un groupe aromatique divalent, ou un groupe dans lequel un groupe aromatique divalent est lié à un groupe alkylène ayant 1 à 12 atomes de carbone, -CO-, -O-, -NR- (où R est un atome d'hydrogène ou un groupe alkyle ayant 1 à 8 atomes de carbone) qui peut être substitué par un groupe alkyle ayant 1 à 8 atomes de carbone, -S-, -SO- ou -SO² -,
X³ et X⁴ sont chacun indépendamment O ou S,
L³ et L⁴ sont chacun indépendamment un groupe alkylène ayant des atomes de carbone dans une gamme de 2 à 12,
Y³ est SH lorsque X³ est S et Y³ est OH lorsque X³ est O,
Y⁴ est SH lorsque X⁴ est S et Y⁴ est OH lorsque X⁴ est O, et
m est un nombre entier de 30 ou plus.

2. Résine pour former un film isolant selon la revendication 1,
dans lequel le polyamide-imide modifié et le polyimide modifié ont un poids moléculaire moyen en poids dans une gamme de 10 × 10⁴ à 30 × 10⁴, ou un poids moléculaire moyen en nombre dans une gamme de 2 × 10⁴ à 5 × 10⁴.

3. Résine pour former un film isolant selon la revendication 1 ou 2,
dans lequel le polyamide-imide modifié est obtenu en liant un groupe NCO d'un polyamide-imide ayant un groupe NCO terminal et un groupe OH d'un diol linéaire ou un groupe SH d'un dithiol linéaire.

4. Résine pour former un film isolant selon la revendication 1 ou 2,
dans lequel le polyimide modifié est obtenu en liant un groupe NCO d'un polyimide ayant un groupe NCO terminal et un groupe OH d'un diol linéaire ou un groupe SH d'un dithiol linéaire.

5. Un vernis comprenant :
une résine pour former un film isolant; et
un solvant polaire,
dans laquelle la résine pour former un film isolant est la résine pour former un film isolant selon l'une quelconque des revendications 1 à 4.

6. Procédé de fabrication d'un conducteur isolé comprenant:
une étape d'application du vernis selon la revendication 5 sur une surface d'un conducteur pour former une couche de revêtement sur la surface du conducteur; et
une étape consistant à chauffer la couche de revêtement pour produire un film isolant et à cuire le film isolant sur le conducteur.

7. Dispersion pour électrodéposition comprenant :
une résine pour former un film isolant;
un solvant polaire;
de l'eau;
un mauvais solvant; et
une base,
dans laquelle la résine pour former un film isolant est la résine pour former un film isolant selon l'une quelconque des revendications 1 à 4.

8. Procédé de fabrication d'un conducteur isolé comprenant:
une étape d'électrodéposition de la dispersion d'électrodéposition selon la revendication 7 sur une surface d'un conducteur pour former une couche d'électrodéposition sur la surface du conducteur; et
une étape consistant à chauffer la couche d'électrodéposition pour produire un film isolant et pour cuire le film isolant sur le conducteur.
